# EUROPÄISCHE PATENTSCHRIFT

(11) **EP 2 790 527 B1**
(45) Veröffentlichungstag und Bekanntmachung des Hinweises auf die Patenterteilung: **30.03.2016**
(21) Anmeldenummer: 12823189.1
(22) Anmeldetag: 10.12.2012
(51) Int. Cl.: A23K 20/22, A23K 20/24, A23K 20/28, A23K 10/16, A23K 10/30

(54) **ZUSATZSTOFF FÜR SELEN-HALTIGE FUTTERMITTEL**
ADDITIVE FOR SELENIUM-CONTAINING ANIMAL FEEDSTUFFS
ADDITIF DESTINÉ À DES ALIMENTS POUR ANIMAUX CONTENANT DU SÉLÉNIUM

(30) Priorität: 14.12.2011 AT 6702011
(43) Veröffentlichungstag der Anmeldung: 22.10.2014
(73) Patentinhaber: Erber Aktiengesellschaft, 3130 Herzogenburg (AT)
(72) Erfinder: BINDER, Eva-Maria, 3430 Tulln (AT); SCHATZMAYR, Dian, Alexandra, 3430 Tulln (AT); SCHWARTZ, Heidi, Elisabeth, 1050 Wien (AT)
(74) Vertreter: Cunow, Gerda
(86) Internationale Anmeldenummer: PCT/AT2012/000311
(87) Internationale Veröffentlichungsnummer: WO 2013/086548

(56) Entgegenhaltungen:
- EP-A2- 0 043 202
- DE-A1-102008 002 013
- DE-B- 1 082 486
- Z. FAIXOVÁ ET AL: "Efficacy of Dietary Selenium to Counteract Toxicity of Deoxynivalenol in Growing Broiler Chickens", ACTA VETERINARIA BRNO, Bd. 76, Nr. 3, 1. Januar 2007 (2007-01-01) , Seiten 349-356, XP055063175, ISSN: 0001-7213, DOI: 10.2754/avb200776030349
- DVORSKA ET AL: "Protective effect of modified glucomannans and organic selenium against antioxidant depletion in the chicken liver due to T-2 toxin-contaminated feed consumption", COMPARATIVE BIOCHEMISTRY AND PHYSIOLOGY PART C: TOXICOLOGY & PHARMACOLOGY, ELSEVIER, US, Bd. 145, Nr. 4, 1. Mai 2007 (2007-05-01), Seiten 582-587, XP022053827, ISSN: 1532-0456, DOI: 10.1016/J.CBPC.2007.02.005
- DANICKE S ET AL: "On the effects of a hydrothermal treatment of deoxynivalenol (DON)-contaminated wheat in the presence of sodium metabisulphite (Na2S2O5) on DON reduction and on piglet performance", ANIMAL FEED SCIENCE AND TECHNOLOGY, ELSEVIER, AMSTERDAM, NL, Bd. 118, Nr. 1-2, 3. Januar 2005 (2005-01-03), Seiten 93-108, XP027871307, ISSN: 0377-8401 [gefunden am 2005-01-03]

## Beschreibung

Die vorliegende Erfindung bezieht sich auf einen zusatzstoff für überwiegend aus Pflanzen bzw. Pflanzenbestandteilen, wie Getreide, Mais, Gras, Lucerne oder dgl. bestehende Selen-haltige Futtermittel, enthaltend wenigstens ein anorganisches Trichothecene und/oder Zearalenone detoxifizierendes Salz.

Zusatzstoffe für Futtermittel sind für die unterschiedlichsten Einsatzzwecke bekannt und werden weit verbreite verwendet, wie beispielsweise Zusatzstoffe, welche Mangelerscheinungen des Tieres während der Aufzucht hintanhalten sollen, wie Vitaminzubereitungen oder dgl., oder auch Zusatzstoffe, welche insbesondere die Leistungsfähigkeit erhöhen sollen, sowie schließlich Zusatzstoffe, welche für das Binden und/oder Unschädlichmachen von schädlichen Substanzen, welche häufig in Futtermitteln vorkommen, insbesondere von überwiegend aus Pflanzen bzw. Pflanzenbeatandteilen bestehenden Futtermitteln vorhanden sind, wie Mykotoxine oder dgl., gedacht sind.

Zur Detoxifikation von Futtermitteln für Nutztiere sind hierbei einerseits verschiedenste Substanzen, auf welchen die auf bzw. in aus Pflanzen bzw. Pflanzenbestandteilen, wie Getreide, Mais, Gras, Lucerne oder dgl. überwiegend bestehenden Futtermittel vorhandenen Mykotoxine adsorbier bzw. angelagert werden, bekannt, wobei hier insbesondere Bentonite oder Zeolite zum Einsatz gelangen, welche aufgrund der Vielzahl von darin ausgebildeten Schichten, Kanälen und Poren eine extrem große, innere Oberfläche aufweisen, auf welcher große Mengen an schädlichen Substanzen adsorbiert werden können.

Schließlich ist es in den letzten Jahren gelungen, spezifische Mikroorganismen aufzufinden, welche in der Lage sind, einzelne Mykotoxine, wie Deoxynivalenol enzymatisch abzubauen.

Ein weiterer Weg zur Entfernung von Mykotoxinen aus Futtermitteln ist der Einsatz von Hefen bzw. Hefebestandteilen, wie beispielsweise Hefezellwänden, an welchen Mykotoxine angelagert bzw. gebunden werden können und somit unschädlich gemacht werden können.

Neben der Adsorption bzw. Anlagerung von Mykotoxinen an Oberflächen und dem enzymatische Abbau von Mykotoxinen ist es jedoch auch möglich, Mykotoxine chemisch und/oder enzymatisch zu detoxifizieren, indem sie zu nicht toxischen Spalt- oder Reaktionsprodukten abgebaut oder umgewandelt werden.

In diesem Zusammenhang ist beispielsweise der DE 10 2008 002 013 A1 zu entnehmen, dass mit Mykotoxinen kontaminierte, pflanzliche Ernteprodukte dadurch detoxifiziert werden können, dass sie mit einer Zubereitung enthaltend wenigstens eine von Schwefeldioxid abgeleitete Sauerstoffsäure oder deren Salze sowie ein Amin der Formel NH₂R oder dessen Salze der Formel [NH₃-R]⁺X⁻ eingesetzt werden. Durch Einsatz einer derartigen Mischung gelingt es, Mykotoxine, insbesondere Trichothecene und/oder Zearalenone abzubauen und somit unschädlich zu machen.

Aus der US 4508737 A ist bereits ein Hilfsmittel für die Konservierung und Steuerung der Fermentation von Silagen bekannt geworden, welches aus einer Mischung von Alkalimetallsulfiten, Bisulfiten, Metabisulfiten und dgl. besteht.

Auch die DE 1082486 B1 beschreibt ein Silierhilfsmittel, bei welchem in anaerober Umgebung durch Zusatz von primären und sekundären Alkalimetallsalzen der schwefeligen Säure das Wachstum der den Gärverlauf fördernden Milchsäurebakterien unterstützt werden soll.

Die US 5786007 A beschreibt ein Bindemittel für die Herstellung von Futtermittelpellets, welchen eine Mischung von wasserfreien Salzen dem Futtermittel zugesetzt wird und durch Aussetzen an erhöhte Temperaturen und Feuchtigkeit die Verpressfähigkeit von Pellets verbessert wird.

Als nachteilig im Einsatz hat sich hierbei erwiesen, dass Kombinationen aus einer monosubstituierten Aminverbindung und einer von Schwefeldioxid abgeleitete Sauerstoffgäure oder deren Salze zum Einsatz gelangen müssen, um die auf dem Futtermittel vorhandenen bzw. vorliegenden Mykotoxine, insbesondere die Trichothecene, Aflatoxine und/oder Zearalenone abzubauen, was die Zusammensetzung des Futtermittels bzw. des Zusatzstoffs relativ komplex macht.

Nachteilig bei den bekannten Verfahren zum Entgiften von überwiegend aus Pflanzen bzw. Pflanzenbestandteilen bestehenden Futtermitteln ist darüber hinaus weiters das Faktum, dass jede bis dato bekannte detoxifizierende Einzelsubstanz bzw. jeder einsetzbare Mikroorganismus nur ein bzw. höchstens zwei verschiedene Mykotoxin-Familien zu entgiften bzw. zu binden vermochte und somit immer nur ein ganz spezifischer Einsatz der einzusetzenden Substanzen bzw. Mikroorganismen möglich war.

Die vorliegende Erfindung zielt nun darauf ab, einen Zusatzstoff für überwiegend aus Pflanzen bzw. Pflanzenbeittandteilen, wie Getreide, Mais, Gras, Lucerne oder.dgl. bestehendes Selen-haltiges Futtermittel zur Verfügung zu stellen, mit welchem es gelingt, eine Vielzahl von derartigen in Futtermitteln vorhandenen, schädlichen Bestandteilen, wie insbesondere Mykotoxine gleichzeitig abzubauen bzw. zu immobilisieren.

Gemäß der Erfindung ist der Zusatzstoff für ein überwiegend aus Pflanzen bzw. Pflanzenbestandteilen bestehendes Futtermittel im Wesentlichen dadurch gekennzeichnet, dass als anorganisches Trichothecene und/oder Zearalenone detoxifizierendes Salz ein Alkali- oder Erdalkalimetallsulfit und dass zusätzlich eine Selen-haltige Verbindung, wie eine Selenhefe enthalten ist, und gegebenenfalls ein Selen-haltiges Salz enthalten sind. Indem der Zusatzstoff so aufgebaut ist, dass als anorganisches Mykotoxine detoxifizierendes Salz ein Alkali- oder Erdalkalimetallsulfit und dass zusätzlich eine weitere Selen-haltige Verbindung, wie eine Selenhefe enthalten ist, und gegebenenfalls ein Selen-haltiges Salz enthalten ist, gelingt es einerseits, nicht nur die bekannte, keimtötende Wirkung des Sulfits bzw. analoger oder ähnlicher Selenhaltiger Salze auszunützen, sondern es hat sich überraschender Weise gezeigt, dass der Einsatz von nur geringen Mengen an Alkali- und oder Erdalkalimetallsulfiten besonders günstig auf den Abbau von Mykotoxinen aus der Gruppe der Trichothecene und/oder Zearalenone wirkt. Es wird somit mit einer relativ geringen Menge an zugesetztem, anorganischen Alkali- oder Erdalkalimetallsulfit für den Abbau von vergleichsweise großen Mengen an Mykotoxinen das Auslangen gefunden, so dass nicht nur ein äußerst effizient wirkender Zusatzstoff, welcher überdies unmittelbar in fester Form eingesetzt werden kann, zur Verfügung gestellt wird, sondern auch der Einsatz des Zusatzstoffs in für den nachfolgenden Verzehr denfalls unschädlichen Mengen ausreichend erscheint. Verbesserte Ergebnisse werden beim fakultativen Einsatz von Selen-haltigen Salzen erzielt, wobei angenommen wird, dass im vorliegenden Fall eine katalytische Wirkung durch den Selengehalt der eingesetzten Salze bzw. Verbindungen bewirkt wird.

Indem eine Selen-haltige Verbindung, wie eine Selenhefe enthalten ist, wird zusätzlich zu den vorteilhaften Wirkungen des Selens in dem Zusatzstoff eine Hefe zur Verfügung gestellt, an welcher Mykotoxine, wie beispielsweise Zearalenone adsorbiert werden können. Hierdurch wird eine noch vollständigere Detoxifizierung des mit dem Zusatzstoff behandelten Futtermittels erzielt.

Gemäß.einer bevorzugten Weiterbildung ist der Zusatzstoff so ausgebildet, dass ein Natrium-, Kalium-, Magnesium- und/oder Calciumsulfit enthalten ist. Der Einsatz von einem beliebigen, aus den oben genannten Sulfiten ist nicht nur Ökonomisch günstig, sondern es sind diese Verbindungen aufgrund ihrer relativ guten Löslichkeit und Bearbeitbarkeit insbesondere bevorzugt. Darüber hinaus wirken die bevorzugten Sulfite zusätzlich als Reduktionsmittel, so dass gegebenenfalls weitere in dem auf Pflanzen bzw. Pflanzenbestandteilen beruhenden Futtermittel enthaltene, schädliche Substanzen unmittelbar zu nicht toxischen Substanzen reduziert werden können.

Indem, wie dies einer bevorzugten Weiterbildung der vorliegenden Erfindung entspricht, ist das anorganische Trichothecene und/oder Zearalenone detoxifizierende Sulfit in einer Menge von 10 % bis 100 % in dem Zusatzstoff enthalten bzw. der Zusatzstoff besteht aus demselben, und es genügt, Trichothecene und insbesondere Deoxynivalenol rasch und zuverlässig in Deoxynivalenolsulfonat, welches einen nicht toxische Metaboliten darstellt, umzuwandeln bzw. Zearalenon zu etoxifizieren.

Gemäß einer bevorzugten Weiterbildung der Erfindung ist der Zusatzstoff so ausgebildet, dass zusätzlich oder anstelle des Alkali- und/oder Erdalkalimetallsulfits als Selen-haltiges Salz wenigstens ein Natrium-, Kalium-, Magnesium-, Calcium-Selenit in dem Zusatzstoff enthalten sind. Indem als Selen-haltiges Salz wenigstens ein Natrium-, Kalium-, Magnesium-, Calciumselenit in dem Zusatzstoff enthalten ist, gelingt es einerseits, die Mykotoxine sicher und zuverlässig in ihre nicht toxischen Metaboliten abzubauen und andererseits gleichzeitig das wichtige Spurenelement Selen in ausreichenden Mengen zur Verfügung zu stellen, so dass insgesamt eine Leistungssteigerung bei den damit gefütterten Tieren, welche über den Summeneffekt von einer alleinigen Gabe von Selen oder einer Detoxifizierung der Mykotoxine hinausgeht, erzielt werden kann.

Gemäß einer bevorzugten Weiterbildung der vorliegende Erfindung ist der Zusatzstoff so ausgebildet, dass Selen in einem Fertigfutter in einer Konzentration von höchsten 0,5 ppm, vorzugsweise höchstens 0,2 ppm vorliegt. Indem die Selenkonzentration auf ein Maximum von 0,5 ppm eingestellt wid, wird sichergestellt, dass einerseits das Spurenelement Selen in ausreichenden Mengen vorhanden ist, und andererseits übergroße Mengen, welche wiederum nachteilige Auswirkungen haben können, mit Sicherheit vermieden werden. Hierzu wird beispielsweise der Zusatzstoff so ausgebildet dass Mischungen aus Alkali- oder Erdalkalimetallsulfiten und beispielsweise einer Selenhefe eingesetzt werden, wodurch ein zusätzlicher, bevorzugter Effekt dahingehend erzielt wird, dass die in dem Zusatzstoff enthaltene Hefe in an sich bekannter Weise gegebenenfalls weitere in dem Futtermittel enthaltene Mykotoxine binden und somit unschädlich machen kann.

Für eine weitere Verbesserung der Anlagerung bzw. Adsorption von in Futtermitteln enthaltenen Mykotoxinen bzw. um zusätzlich auch verwertbare bzw. die Leistung von Tieren steigernde Substanzen dem Futtermittelzusatzstoff beizugeben, ist der erfindungsgemäße Zusatzstoff so weitergebildet, dass zusätzlich ein fester Träger gewählt aus einer oder mehreren Substanz(en), wie einem natürlich vorkommenden oder modifizierten Silikatmineral, wie Smektit, Montmorillonit, Saponit, Kaolinit, Vermiculit, Illit, Sepiolith, Attapulgit, Zeolith, Klinoptilolith und/oder silikatmineral-haltige Verbindungen, wie Bentonit, Diatomeenerde und/oder Biopolymere, wie Chitosan oder Mannanoligosaccharide enthalten sind. Hierbei gelingt es durch gezielte Auswahl von einem anorganischen Träger auf Silikatbasis überraschenderweise die durch Zusatz der Alkali- oder Erdalkalisulfite gebildeten Reaktionsprodukte von Deoxynivalenol sicher und zuverlässig zu adsorbieren und durch Auswahl von gegebenenfalls verwertbaren als Träger einsetzbaren Biopolymere eine noch weitere Leistungssteigerung von Tieren zu erzielen, welchen der Zusatzstoff gemäß der vorliegenden Erfindung verfüttert wurde.

Indem, wie dies einer bevorzugten Weiterbildung der vorliegenden Erfindung entspricht, der Zusatzstoff so ausgebildet ist, dass der feste Träger in einer Menge von 90 % bis 5 % des Zusatzstoffs enthalten ist, gelingt es, eine beliebige Anpassung des Zusatzstoffs an die beabsichtigten Zwecke sicherzustellen, wie beispielsweise an Fälle, in welchen zusätzlich zu einer effektiven Dekontamination von Mykotoxinen bzw. einem Abbau derselben auch ein bestimmter, gezielter Nährstoffgehalt zur Verfügung gestellt werden soll, einzustellen.

Um zusätzlich mit Sicherheit jede Kontamination mit Zearalenon, der mit dem Zusatzstoff gemäß der vorliegenden Erfindung versetzten Futtermittel mit Sicherheit hintanzuhalten, ist der Zusatzstoff bevorzugt so weitergebildet, dass zusätzlich Selenfreie Hefen und/oder Hefezellwände oder Hefezellwandbestandteile enthalten sind. Indem zusätzlich Selen-freie Hefen und/oder Hefezellwände oder Hefezellwandbestandteile enthalten sind, gelingt nicht nur eine sichere Adsorption von Zearalonen sondern es wurde überraschender Weise neben der oben beschriebenen synergistischen Wirkung eine Bindung der gebildeten Abbauprodukte, insbesondere der Deoxynivalenol-Sulfonate erreicht, so dass noch eine weitere Leistungssteigerung der mit dem Futtermittelzusatz gemäß der Erfindung versorgten Tiere beobachtet werden kann.

Es hat sich hierbei als günstig erwiesen, dass, wie dies einer bevorzugten Weiterbildung der Erfindung entspricht, die Selen-freien Hefen und/oder Hefezellwände oder Hefezellwandbestandteile einer Menge von 80 % bis 10 % enthalten sind, so dass die Adsorption der als Reaktionsprodukte gebildeten Deoxynivalenol-Sulfonate sichergestellt werden kann. kann.

Überraschender Weise hat es sich gezeigt, wenn die Erfindung bevorzugt so weitergebildet ist, dass der Zusatzstoff als anorganisches Trichothecene und/oder Zearalenone detoxifizierendes Salz Natriumsulfit sowie zusätzlich katalytische Mengen, insbesondere eine Konzentration von 2 bzw. 20 Gew.-% einer Selenhefe enthält, die Wirkung des anorganischen Trichothecene und/oder Zearalenone detoxifizierenden Salzes deutlich verstärkt werden kann, was auf eine katalytische Wirkung der zugesetzten Selenhefe zurückgeführt wird, da in einem Endfuttermittel nach Abbau sämtlicher Mykotoxine nach wie vor eine nahezu unveränderte Konzentration an Selen nachgewiesen werden kann.

Ein insbesondere vollständiges Entfernen von Trichothecene, wie Deoxynivalenol oder Aflatoxin und Zearalenon in Futtermitteln gelingt, wenn der Zusatzstoff bevorzugt so ausgebildet ist, dass er 25 bis 93 Gew.-% Natriumsulfit, 2 bis 20 Gew.-% Selen-Hefe sowie 5 bis 73 Gew.-% Bentonit als Träger enthält. Um sicherzustellen, dass eine gleichmäßige Detoxifizierung sämtlicher in einem Futtermittel möglicherweise enthaltener Mykotoxine gelingt, ist der Zusatzstoff bevorzugt so weitergebildet, dass er als homogenes, fein vermahlenes Pulver eingesetzt ist. Wenn ein derartiges fein vermahlenes Pulver unter das Futtermittel gemischt wird, wird sichergestellt, dass es gleichmäßig im gesamten Futtermittel die vorhandenen Mykotoxine entweder mittels Reduktion in unschädliche Bestandteile abbaut oder aber diese an der Oberfläche der weiteren in dem Zusatzstoff enthaltenen Adsorbentien adsorbiert werden und somit nicht mehr verstoffwechselt werden können.

Überraschender Weise konnte gezeigt werden, dass, wie dies einer bevorzugten Weiterbildung der Erfindung entspricht, der Futtermittelzusatz zur Leistungssteigerung von Nutztieren eingesetzt werden kann. Hierbei wird die Leistungssteigerung einerseits auf die Detoxifizierung bzw. die Adsorption der auf dem Futtermittel vorhandenen Mykotoxine zurückgeführt und andererseits darauf, dass die zusätzlich in dem Futtermittelzusatz enthaltenen, gegebenenfalls verwertbaren Substanzen, wie Hefen und dgl. ebenfalls zu einer Leistungssteigerung beizutragen vermögen.

Gemäß einer bevorzugten Weiterbildung wird der erfindungsgemäße Futtermittelzusatz zur Detoxifizierung von Trichothecenen, insbesondere Deoxynivalenol und T2-Toxin, und/oder Zearalenon verwendet.

Die Erfindung wird nachfolgend anhand von Abbauversuchen mit verschiedenen Alkali- bzw. Erdalkalimetallsufiten sowie gegebenenfalls Selenhefen an mit Deoxynivalenol kontanimierten Mais durchgeführt.

In diesen wurde Maisschrot mit unterschiedlich natürlichen Wassergehalten und verschiedenen Ausgangskonzentrationen an Deoxynivalenol (DON) und Acetyldeoxynivalenol (AcDON) mit verschiedenen Konzentrationen an Alkali- bzw. Erdalkalimetallsulfit vermischt.

Die Ergebnisse sind in den nachfolgenden Versuchen und Figuren dargestellt. In diesen zeigt
Fig. 1 ein Abbaudiagramm von Deoxynivalenol (DON) in Futtermitteln bei pH 4,5,
Fig. 2 ein analoges Abbaudiagramm von Deoxynivalenol in Futtermitteln bei pH 8,
Fig. 3 ein Diagramm der nach 1 h gebildeten Abbauprodukte von Deoxynivalenol in verschiedenen Proben mit 0,5 % Natriumbisulfit,
Fig. 4 ein Diagramm der nach 2 h gebildeten Abbauprodukte von Deoxynivalenol in verschiedenen Proben mit 0,5 % Natriumbisulfit,
Fig. 5 ein Diagramm der nach 1 h gebildeten Abbauprodukte von Deoxynivalenol in verschiedenen Proben mit 0,5 % Natriumsulfit,
Fig. 6 ein Diagramm der nach 2 h gebildeten Abbauprodukte von Deoxynivalenol in verschiedenen Proben mit 0,5 % Natriumsulfit.

### Versuch 1

Maisschrot mit 6 % Wassergehalt, neutralen pH-Wert, 23,0 ppm DON und 3,1 ppm AcDON als Ausgangskonzentration sowie 1 % Na-Sulfit wurden nach einer Inkubationszeit von 24 h bei unterschiedlichen Temperaturen je zwei Mal vermessen. In Tabelle 1 ist ersichtlich, dass bei Raumtemperatur (25 °C) innerhalb von 24 h eine Reduktion der Ausgangskonzentration von DON bzw. AcDON um 64 % bzw. 67 % erreicht werden kann, wohingegen bei Durchführung desselben Tests bei 60°C im Wesentlichen keine Änderung der Reduktion gegenüber Raumtemperatur ersehen werden kann. Im Einzelnen wurden hierbei bei zwei Wiederholungen Reduktionen von 63 % bzw. 75 % der Ausgangstoxine erzielt.

**Tabelle 1**

| | Raumtemp. | Raumtemp. | 60 °C | 60°C |
|---|---|---|---|---|
| Sulfitbehandlung (1 % Na-Sulfit) | 67 | 64 | 63 | 75 |

Ein analoger Versuch (zwei Wiederholungen) wurde unter Zusatz von 1 % Natriumsulfit für eine längere Inkubationszeit durchgeführt, wobei, wie dies aus Tabelle 2 ersichtlich ist, nach einer Inkubationszeit von 48 Stunden bei Raumtemperatur (25 °C) eine Reduktion von 54 % bzw. 61 % erzielt wurde, wohingegen bei erhöhten Temperaturen von 60 °C eine Reduktion der Ausgangstoxinkonzentration von bis zu 83 % erzielt werden kann.

**Tabelle 2**

| | Raumtemp. | Raumtemp. | 60 °C | 60°C |
|---|---|---|---|---|
| Sulfitbehandlung (1 % Na-Sulfit) | 54 | 61 | 83 | 57 |

In einem weiteren Versuch wurde Maisschrot mit einem Wassergehalt von z und neutralem pH-Wert und einer Ausgangskonzentration von 14,8 ppm DON je zwei Mal einer Natriumsulfitbehandlung mit 0,2 % Natriumsulfit unterworfen, wobei sich zeigte, dass innerhalb der ersten 24 h eine Reduktion von 46 % erzielt werden konnte und dass bei einer längeren Lagerung des Maisschrots unter gleichbleibenden Bedingungen (wie Temperatur, relative Luftfeuchtigkeit) bei 25 °C bis zu 7 Tage die Konzentration an DON reduziert wird, bis etwa 76 % der Ausgangstoxinkonzentration abgebaut wurde.

**Tabelle 3**

| | 24 h | 48 h | 7 T |
|---|---|---|---|
| Sulfitbehandlung (0,2 % Na-Sulfit) | 46 | 65 | 76 |

Schließlich wurde weiters Maisschrot mit 13,5 Wassergehalt und einer Ausgangskonzentration von 23,0 ppm DON je zwei Wiederholungen einer Behandlung mit 0,5 % Natriumsulfit sowie Selenhefe, wobei die Selenhefe 2000 ppm Selen enthält, unterworfen. Aus Tabelle 5 ergibt sich, dass bereits unmittelbar nach der Mischung des Maisschrots mit dem Futtermittelzusatz zwischen 69 % und 71 % der Ausgangskonzentration des in dem Futtermittelsatz enthaltenen DONs reduziert bzw. abgebaut war und dass danach 24 h der Wert im Wesentlichen konstant aufrecht erhalten wurde, woraus klar ein synergistischer Effekt zwischen dem Alkalimetallsulfit und der Selenhefe bzw. eine katalytische Wirkung der Selenhefe abgeleitet werden kann.

**Tabelle 4**

| | 0,5 h | 0,5 h | 24 h | 24 h |
|---|---|---|---|---|
| 0,5 % Na-Sulfit | 69 | 71 | 72 | 75 |
| 0,005 % Selenhefe | | | | |

Schließlich wurde in einem Lagerversuch Ferkelfutter enthaltend 0,1 % Natriumsulfit bzw. 0,1 % Magnesiumsulfit in Bezug auf die Reduktion der Mykotoxinkonzentration untersucht. Wie dies aus Tabelle 6 entnehmbar ist, konnten mit Natriumsulfit deutlich bessere Ergebnisse, und zwar sowohl in Bezug auf die Deoxynivalenol (DON) als auch in Bezug auf Ac-DON als auch in Bezug auf Zearalenon (ZON) im Vergleich zu einer Behandlung mit Magnesiumsulfit erzielt werden.

**Tabelle 5**

| | DON | Ac-DON | ZON |
|---|---|---|---|
| MT Konzentartion am Start [ppm] | 34,159 | 1,206 | 0,136 |
| Na-Sulfit, 2 Tage | 21,399 | 1,076 | 0,85 |
| Mg-Sulfit, 2 Tage | 30,071 | 1,034 | 0,95 |
| Na-Sulfit, 5 Tage | 19,525 | 0,502 | 0,90 |
| Mg-Sulfit, 5 Tage | 26,398 | 0,722 | 0,96 |

Zusammenfassend ist somit festzuhalten, dass durch Zusatz geringer Mengen anorganischer Alkali- bzw. Erdalkalimetallsulfite sowie gegebenenfalls von Selen-haltigen Substanzen, wie Selenhefe eine deutliche Verringerung der Mykotoxinkonzentration in Futtermitteln erzielt werden kann, ohne dass weitere Zusatzstoffe bzw. künstliche Feuchtigkeit zugesetzt werden müssen.

### Versuch 2

In einem in vitro-Versuch wurde versucht, mit Deoxynivalenol kontaminierte Futtermittelproben mit unterschiedlichen Zusatzstoffen bzw. Mischungen von Zusatzstoffen gemäß der Erfindung zu dekontaminieren.

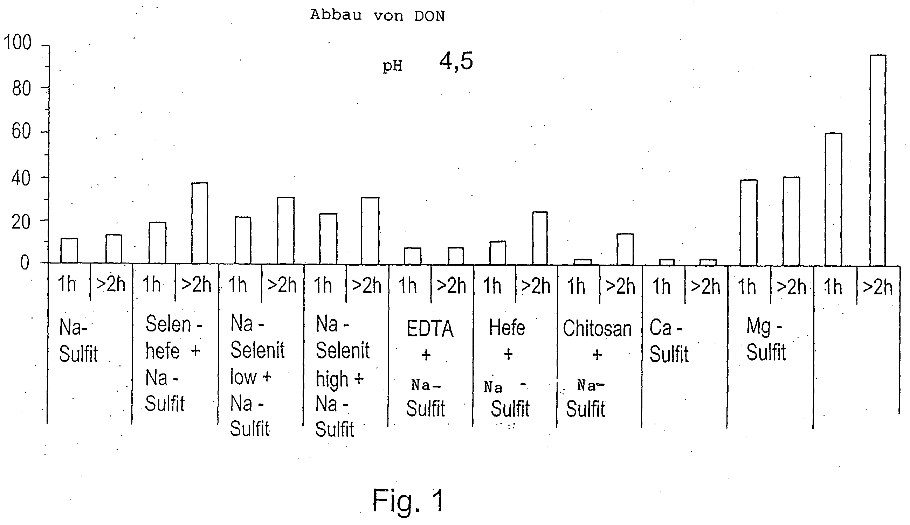

Im Einzelnen wurden 10 g einer mit Deoxynivalenol belastete Futterprobe enthaltend Maisschrot in ein Probenröhrchen gefüllt und mit einer wässrigen 0,05 % Natriumsulfit Lösung mit einem pH-Wert von 4,5 versetzt. In Fig. 1 ist erkenntlich, dass nach 1 h etwa 13 % des enthaltenen Deoxynivalenols detoxifiziert waren und nach einer Zeit von mehr als 2 h etwa 16 % desselben. Wenn eine Probe, welche dieselbe Konzentration an Deoxynivalenol aufweist, mit einer Aufschlämmung enthaltend 0,05 % Natriumsulfit und 0,05 Gew.-% einer Selenhefe behandelt wird, sind nach 1 h etwa 20 % des Deoxynivalenols abgebaut und nach mehr als 2 h etwa 40 %. Analoge Versuche wurden jeweils unter Zusatz von 0,05 % Natriumsulfit und Natriumselenit, Natriumsulfit und EDTA, Natriumsulfit und Hefe, Natriumsulfit und Chitosan, Kalziumsulfit, Magnesiumsulfit durchgeführt. Die besten Ergebnisse werden hierbei neben der Kombination Natriumsulfit und Selenhefe mit Natriumsulfit und Magnesiumsulfit erzielt, bei welchen bereits nach 1 h eine Reduktion von 40 % des in der Probe enthaltenen Deoxynivalenols beobachtet werden kann.

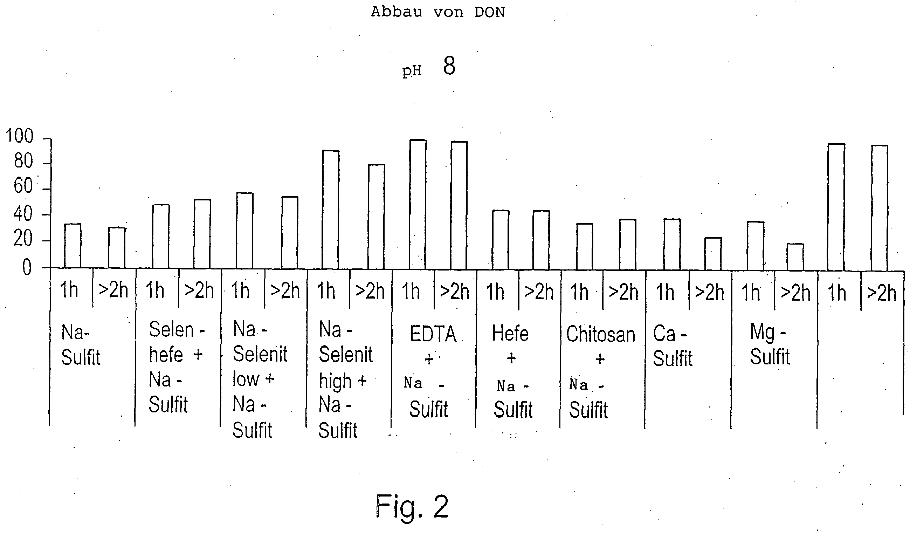

Ein analoger Versuch mit gleichen Konzentrationen an Deoxynivalenol, Natriumsulfit und den weiteren aufgeführten Zusatzstoffen wurde bei einem pH-Wert von 8 durchgeführt, wobei sich ergibt, dass insbesondere wenn der Zusatzstoff in einem neutralen bis leicht basischem Milieu zugefügt wird, ein extrem rascher Abbau des Deoxynivalenols beobachtet werden kann, wobei überraschenderweise im basischen Milieu die besten Ergebnisse mit Natriumsulfit und ETDA bzw. Natriumsulfit und Natriumselenit erzielt werden können, bei welchen, wie dies in Fig. 2 dargestellt ist, mit Natriumsulfit und EDTA eine 100 %ige chemische Umwandlung von Deoxynivalenol erzielt werden kann und mit Natriumsulfit und Natriumselenit nach 1 h bereits mehr als 90 % des Deoxynivalenols umgewandelt sind.

Aus Fig. 1 und 2 ergibt sich somit, dass, wie dies einer bevorzugten Ausführung der vorliegenden Erfindung entspricht, der Futtermittelzusatz direkt in das Futtermittel eingemischt werden kann und unmittelbar, ohne dass ein derartig versetztes Futtermittel von einem Tier aufgenommen werden muss bzw. bevor es aufgenommen wird, eine Detoxifikation des Futtermittels stattfindet.

### Versuch 3

Dieser Versuch zeigt einen Vergleich der Abbaufähigkeit zwischen Natriumsulfit und dem im Stand der Technik bereits verwendeten Natriumbisulfit anhand von verschiedensten Deoxynivalenol enthaltenden Proben.

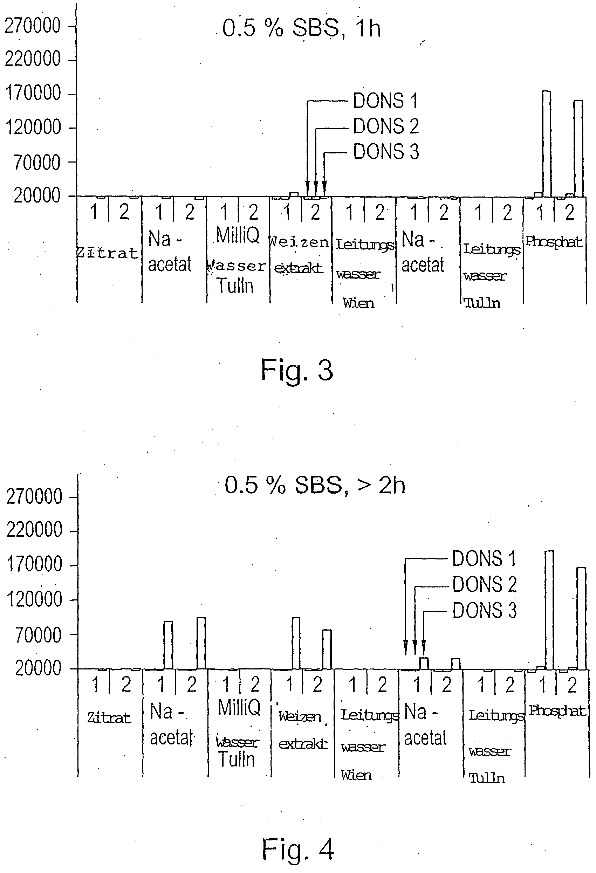

Aus Fig. 3 und 4, welche die Wirkung von Natriumbisulfit (SBS) nach 1 h bzw. 2 h auf die verschiedensten Proben zeigen, ist klar erkenntlich, dass Natriumbisulfit innerhalb von 1 h nur in Phosphat-gepufferten Proben ein Wirkung zeigt, während nach 2 h zumindest in Proben enthaltenden Natriumacetat, Weizenextrakt und Phosphatpuffer bemerkenswerte Mengen des Deoxynivalenols zu DONS3, dessen Struktur gegenwärtig noch nicht bekannt ist, abgebaut wurden.

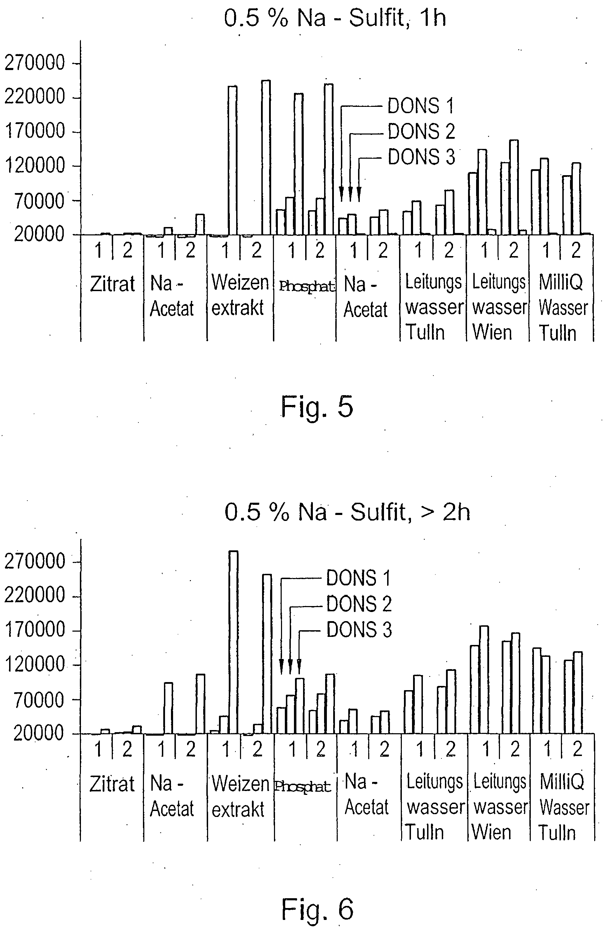

Bei Verwendung von analogen Proben, jedoch bei Einsatz von 0,5 % Natriumsulfit anstelle von 0,5 % Natriummetabisulfit zeigt sich, wie dies in Fig. 5 und Fig. 6 dargestellt ist, dass insbesondere bei den Weizenextrakt- und der Phosphathaltigen Proben nach 1 h bereits wesentliche Mengen an DONS 3 entstanden sind, ebenso wie bei den Leitungswasser-haltigen Proben nicht unbedeutende Mengen an Abbauprodukten, nämlich DONS1 und DONS2, welche ebenfalls nicht mehr schädlich sind, entstanden sind. Wenn dieser Versuch über einen Zeitraum von 2 h laufen gelassen wird, ist erkenntlich, dass Natriumsulfit in der Lage ist, den Gesamtgehalt an Deoxynivalenol in unschädliche Metaboliten, nämlich insbesondere DONS3 in Weizenextrakt-haltigen Proben abzubauen.

Im Einzelnen ist bekannt, dass die Abbauprodukte DONS1 und DONS2 Deoxynivalenolsulfonate bzw. Ketale darstellen, während wahrscheinlich DONS3 ebenso wie DONS2 ein C-15Ketal darstellt, dessen Struktur jedoch zum gegenwärtigen Zeitpunkt nicht vollständig aufgeklärt ist.

Zusammenfassend ist erkennbar, dass Natriumsulfit im Vergleich zu dem bekannten Natriumbisulfit Deoxynivalenol bedeutend rascher und vollständiger abbaut, und zwar insbesondere in drei Metaboliten umwandelt, wohingegen beim Abbau mit Natriumbisulfit, wenn überhaupt, nur ein Metabolit, nämlich DONS3 gefunden werden kann.

### Versuch 4

In Fütterungsversuchen wurde die Wirkung eines Sulfit-haltigen Futtermittelzusatzes bei mit Mykotoxinen kontaminiertem Futter bei der Fütterung von Ferkeln untersucht.

Hierzu wurde in den Versuchsgruppen ca. 20 % des Maises durch hoch kontaminierten Mais ersetzt. 150 Ferkel (ca. 4 Wochen alt, Durchschnittsgewicht 8,33 kg) wurden individuell gezogen und in vier Gruppen mit vergleichbarem Durchschnittsgewicht aufgeteilt. 30 Ferkel, deren individuelles Gewicht zu sehr vom Durchschnitt abweicht, wurden abgesondert.

### Mykotoxinkonzentration des Futters:

2,4 ppm Deoxynivalenol (DON)
0,4 ppm Acetyl-DON
0,24 ppm Zearalenon

### 4 Gruppen erhielten je entweder:

A - Natriumsulfit + Hefe
B - Natriumsulfit
C - Kontrolle
D - Natriumsulfit + Selenhefe

**Lebendgewicht (kg) und Sterblichkeit (Anzahl)**

| | NaS + Hefe | Na-Sulfit | Kontrolle | NaS + SeH |
|---|---|---|---|---|
| Anzahl der Tiere | 30 | 30 | 30 | 30 |
| Anfangsgew. | 8,3 | 8,29 | 8,30 | 8,3 |
| Gewicht Tag 14 | 10,9 | 10,91 | 9,97 | 11,19 |
| Gewicht Tag 28 | 16,48 | 15,94 | 14,31 | 16,71 |
| Gewicht Tag 42 | 25, 30 | 24,74 | 22,10 | 25,61 |
| Sterblichkeit (Anz.) | 0 | 0 | 1 | 0 |

**Futterverwertung**

| | NaS + Hefe | Na-Sulfit | Kontrolle | NaS + SeH |
|---|---|---|---|---|
| Tag 1 - 14 | 1,66 | 1,74 | 1,76 | 1,76 |
| Tag 15 - 28 | 1,81 | 1,71 | 1,75 | 1,91 |
| Tag 1 - 28 | 1,76 | 1,76 | 1,89 | 1,86 |
| Tag 15 - 42 | 1,90 | 1,91 | 1,93 | 1,91 |
| Tag 29 - 42 | 1,96 | 1,98 | 2,03 | 1,91 |
| Tag 1 - 42 | 1,78 | 1,78 | 1,83 | 1,86 |

Natriumsulfit alleine verbesserte die Leistung in Bezug auf Gewichtsentwicklung gegenüber der Kontrollgruppe, die mit Myko-toxinen kontaminiertes Futter ohne deaktivierenden Zusatz enthielt. In Kombination mit Bierhefe sowie Selen-Hefe konnte die detoxifizierende Wirkung, wie auch schon im in vitro-Versuch gezeigt, noch weiter verbessert werden.

### Versuch 5

In einem weiteren Fütterungsversuch wurde die Wirkung von verschiedenen Zusatzstoffen, enthaltend wenigstens ein Alkali- bzw. Erdalkalimetallsulfit bei der Ferkelaufzucht untersucht.

125 Absetzferkel der Rasse Ö-HYB-F1 [(Landrace x Large White) x Pietrain] (gemischtgeschlechtlich, ca. 4 Wochen alt, Durchschnittsgewicht ca. 8,62 kg) wurden markiert, abgewogen, die schwersten und leichtesten Tiere ausgeschieden und die übrigen auf 12 Stalleinheiten à 9 Tieren aufgeteilt, wobei das Durchschnittsgewicht der Boxen möglichst gleich gehalten wurde und jeweils drei Boxen zu einer Versuchsgruppe zusammengefasst wurden.

Die 4 Versuchsgruppen à 27 Ferkel erhielten im Rahmen eines 2-phasigen Fütterungskonzepts von Tag 1 - 14 Starterfutter, und ab Tag 15 ein Aufzuchtfutter, wobei täglich einmal ad libitum gefüttert wurde. Der Maisanteil des Futters wurde durch 2 Chargen Maisschrot, der natürlich mit Mykotoxinen kontaminiert ist, abgedeckt.

### Mykotoxinkonzentration:

Phase 1: 0,8 ppm T-2 Toxin, 0,22 ppm HT-2 Toxin
Phase 2: 2,6 ppm DON

| | Na-Sulfit + Selenhefe | Kontrolle | Na-Sulfit | Na-Sulfit + Na-Selenit (0,5 ppm) |
|---|---|---|---|---|
| Anzahl der Tiere | 27 | 27 | 27 | 27 |
| Anfangsgew. | 8,80 | 8,80 | 8,80 | 8,3 |
| Gewicht Tag 14 | 11,23 | 10,99 | 11,29 | 11,27 |
| Gewicht Tag 42 | 26,95 | 25,97 | 26,44 | 27,76 |
| Gewicht Tag 56 | 38,60 | 36,36 | 38,19 | 39,19 |
| Sterblichkeit (Anz.) | 1 | 2 | 1 | 0 |

### Futterverwertung:

| | Na-Sulfit + Selenhefe | Kontrolle | Na-Sulfit | Na-Sulfit + Na-Selenit (0,5 ppm) |
|---|---|---|---|---|
| Tag 1 - 14 | 1,59 | 1,72 | 1,67 | 1,74 |
| Tag 15 - 42 | 1,70ab | 1,85a | 1,67b | 1,68b |
| Tag 1 - 42 | 1,69ab | 1,83a | 1,67b | 1,68ab |
| Tag 15 - 56 | 1,77 | 1,87 | 1,74 | 1,77 |
| Tag 43 - 56 | 1,86 | 1,90 | 1,83 | 1, 90 |
| Tag 1 - 56 | 1,75 | 1,86 | 1,73 | 1,77 |

Die Wirksamkeit von Natriumsulfit konnte durch den Zusatz von Selenhefe oder Natriumselenit noch weiter verbessert werden.

## Patentansprüche

1. Zusatzstoff für überwiegend aus Pflanzen bzw. Pfanzenbestandteilen, wie Getreide, Mais, Gras oder Lucerne bestehende Selen-haltige Futtermittel, enthaltend wenigstens ein anorganisches Trichothecene und/oder Zearalenone detoxifizierendes Salz, **dadurch gekennzeichnet, dass** als anorganisches Trichothecene und/oder Zearalenone detoxifizierendes Salz ein Alkali- oder Erdalkalimetallsulfit und dass zusätzlich eine Selen-haltige Verbindung, wie eine Selenhefe enthalten ist, und gegebenenfalls ein Selen-haltiges Salz enthalten ist.

2. Zusatzstoff nach Anspruch 1, **dadurch gekennzeichnet, dass** ein Natrium-, Kalium-, Magnesium und/oder Calcium-Sulfit enthalten ist.

3. Zusatzstoff nach Anspruch 1 oder 2, **dadurch gekennzeichnet, dass** das anorganische Trichothecene und/oder Zearalenone detoxifizierende Sulfit in einer Menge von 10 % bis 100 % in dem Zusatzstoff enthalten ist.

4. Zusatzstoff nach einem der Ansprüche 1, 2 oder 3, **dadurch gekennzeichnet, dass** als Selen-haltiges Salz wenigstens ein Natrium-, Kalium-, Magnesium-, Calcium-Selenit in dem Zusatzstoff enthalten ist.

5. Zusatzstoff nach einem der Ansprüche 1 bis 4, **dadurch gekennzeichnet, dass** zusätzlich ein fester Träger gewählt aus einer oder mehreren Substanz(en), wie einem natürlich vorkommenden oder modifizierten Silikatmineral, wie Smektit, Montmorillonit, Saponit, Kaolinit, Vermiculit, Illit, Sepiolith, Attapulgit, Zeolith, Klinoptilolith, und oder silikatmineral-haltige Verbindungen, wie Bentonit, Datomeenerde und/oder Biopolymere, wie Chitosan oder Mannanoligosaccharide enthalten sind.

6. Zusatzstoff nach Anspruch 5, dadurch gekenntzeichnet, dass der feste Träger in einer Menge von 90 % bis 5 % des Zusatzstoffs enthalten ist.

7. Zusatzstoff nach einem der Ansprüche 1 bis 6, **dadurch gekennzeichnet, dass** zusätzlich selenfreie Hefen und/oder Hefezellwände oder Hefezellwandbestandteile enthalten sind.

8. Zusatzstoff nach Anspruch 7, dadurch gekennzeichet, dass die selenfreien Hefen und/oder Hefezellwände oder Hefezellwandbestandteile in einer Menge von 80 % bis 10 % enthalten sind.

9. Zusatzstoff nach einem der Ansprüche 1 bis 8, **dadurch gekennzeichnet, dass** er als anorganisches Trichothecene und/oder Zearalenone detoxifizierendes Salz Natriumsulfit sowie zusätzlich katalytische Mengen, insbesondere eine Konzentration von 0,2 bis 20 Gew.-% einer Selenhefe enthält.

10. Zusatzstoff nach einem der Ansprüche 1 bis 9, **dadurch gekennzeichnet, dass** er 25 bis 93 Gew.-% Natriumsulfit, 2 bis 20 Gew.-t Selen-Hefe sowie 5 bis 73 Gew.-% Bentonit als Träger enthält.

11. Zusatzstoff nach einem der Ansprüche 1 bis 10, **dadurch gekennzeichnet, dass** er als homogenes, fein vermahlendes Pulver eingesetzt ist.

12. Verwendung des Zusatzstoffs nach einem der Ansprüche 1 bis 11 zur Leistungssteigerung von Nutztieren.

13. Verwendung des Zusatzstoffs nach einem der Ansprüche 1 bis 12 zur Detoxifizierung von Deoxynivalenol, T2-Toxin und/oder Zearalenone.

## Claims

1. An additive for selenium-containing forage, primarily comprising plants and/or plant parts, such as cereals, corn, grass, or alfalfa, including at least one inorganic salt detoxifying trichothecenes and/or zearalenones, **characterized in that** an akali or earth alkali metal sulphite is included as the inorganic salt detoxifying trichothecenes and/or zearalenones and that additionally a selenium-containing compound, such as selenium yeast, is included and optionally a selenium-containing salt.

2. An additive according to claim 1, **characterized in that** a sodium, potassium, magnesium, and/or calcium-sulfite is included.

3. An addictive according to claim 1 or 2, **characterized in that** the inorganic sulphite detoxifying, trichothecene and/or zearalenone is included in the additive in an amount from 10% to 100%.

4. An additive according to one of claim 1, 2 or 3, **characterized in that** at least one sodium, potassium, magnesium, calcium selenite is included in the additive as the selenium-containing salt.

5. An additive according to one of claims 1 through 4, **characterized in that** additionally a solid carrier selected from one or more substance(s), such as a naturatly occurring or modified silicate mineral, such as smecite, montmorillonite, sapohite, kaolinite, vermiculite, illite, sepiolite, attapulgite, zeolite, klinopilolite, and /or compounds comprising silicate-minerals, such as bentonite, diatomite, and/or biopolymers, such as chitosan or mannanoligo-saccheride are contained.

6. An additive according to claim 5, **characterized in that** the solid carrier is included in a quantity from 90 % to 5 % of the additive.

7. An additive according to one of claims 1 through 6, **characterized in that** additionally yeasts free from selenium and/or yeast cell walls or yeast cell wall components are included.

8. An additive according to claim 7, **characterized in that** the yeasts free from selenium and/or yeast cell walls or yeast cell wall components are included in a quantity from 80 % to 10%.

9. An additive according to one of claims 1 through 8, **characterized in that** it comprises sodium sulfite as an inorganic salt detoxifying trichothecenes and/or zearalenones as well as additionally katalytic amounts of a selenium yeast, particularly in a concentration from 0,2 to 20 % by weight.

10. An additive according to one of claims 1 through 9, **characterized in that** it includes 25 to 93 % by weight sodium sulfite, 2 to 20 % by weight selenium yeast, as well as 5 to 73 % by weight bentonite as the carrier,

11. An additive according to one of claims 1 to 10, **characterized in that** it is used as a homogenous, finely milled powder.

12. Use of an additive according to any one of claims 1 to 11 for increasing productivity in farm animals.

13. Use of the additive according to any one of claims 1 to 11 for detoxification of deoxynivalenol, T2-toxin and/or zeralenone.

## Revendications

1. Additif pour des produits alimentaires destinés aux animaux contenant du sélénium, constitués majoritairement de plantes ou de composants végétaux, tels que des céréales, du maïs, de l'herbe ou de la lucerne, contenant au moins un sel inorganique détoxifiant des trichothécènes et/ou des zéaralénones, **caractérisé en ce qu'**un sulfite de métal alcalin ou un sulfite de métal alcalino-terreux est utilisé en tant que sel inorganique détoxifiant des tricocéthènes et/ou des zéaralénones, et **en ce qu'**en supplément un composé contenant du sélénium, tel qu'une levure de sélénium, est contenu, et **en ce qu'**éventuellement un sel contenant du sélénium est contenu.

2. Additif selon la revendication 1, **caractérisé en ce qu'**un sulfite de sodium, de potassium, de magnésium et/ou de calcium est contenu.

3. Additif selon la revendication 1 ou 2, **caractérisé en ce que** le sulfite inorganique détoxifiant des trichothécènes et/ou des zéaralénones est contenu dans l'additif en une quantité allant de 10 % à 100 %.

4. Additif selon l'une quelconque des revendications 1, 2 ou 3, **caractérisé en ce qu'**au moins un sélénite de sodium, de potassium, de magnésium, de calcium est contenu dans l'additif en tant que sel contenant du sélénium.

5. Additif selon l'une quelconque des revendications 1 à 4, **caractérisé en ce qu'**en supplément sont contenus un support solide choisi parmi une ou plusieurs des substances telles qu'un minéral à base de silicate présent à l'état naturel ou modifié, tel que la smectite, la montmorillonite, la saponite, la kaolinite, la vermiculite, l'illite, la sépiolite, l'attapulgite, la zéolithe, la clinoptilolite, et/ou des composés contenant un minéral à base de silicate, tels que la bentonite, la terre de diatomée et/ou des biopolymères, tels que le chitosan ou les mannanoligosaccharides.

6. Additif selon la revendication 5, **caractérisé en ce que** le support solide est contenu en une quantité allant de 90 % à 5 % de l'additif.

7. Additif selon l'une quelconque des revendications 1 à 6, **caractérisé en ce qu'**en supplément des levures sans sélénium et/ou des parois cellulaires de levure ou des composants de paroi cellulaire de levure sont contenus.

8. Additif selon la revendication 7, **caractérisé en ce que** les levures sans sélénium et/ou les parois cellulaires de levure ou les composants de paroi cellulaire de levure sont contenus en une quantité allant de 80 % à 10 %.

9. Additif selon l'une quelconque des revendications 1 à 8, **caractérisé en ce qu'**il contient en tant sel inorganique détoxifiant des trichothécènes et/ou des zéaralénones, un sulfite de sodium ainsi qu'en supplément des quantités catalytiques, en particulier une concentration allant de 0,2 à 20 % en poids d'une levure de sélénium.

10. Additif selon l'une quelconque des revendications 1 à 9, **caractérisé en ce qu'**il contient en tant que supports 25 à 93 % en poids de sulfite de sodium, 2 à 20 % en poids de levure de sélénium ainsi que 5 à 73 % en poids de bentonite.

11. Additif selon l'une quelconque des revendications 1 à 10, **caractérisé en ce qu'**il est employé en tant que poudre homogène, finement broyée.

12. Utilisation de l'additif selon l'une quelconque des revendications 1 à 11 servant à augmenter la rentabilité des animaux de rapport.

13. Utilisation de l'additif selon l'une quelconque des revendications 1 à 12 servant à détoxifier la déoxynivalénol, la toxine T2 et/ou des zéaralénones.
